# EUROPÄISCHE PATENTANMELDUNG

(11) **EP 2 208 884 A2**
(43) Veröffentlichungstag der Anmeldung: **21.07.2010**
(21) Anmeldenummer: 09179960.1
(22) Anmeldetag: 18.12.2009
(51) Int. Cl.: F03B 1/00, F03B 3/00, F03B 7/00

(54) **Vorrichtung zur energetischen Nutzung von Wasserkraft**

(30) Priorität: 19.01.2009 CH 702009
(71) Anmelder: Günster, Raimund, 7000 Chur (CH)
(72) Erfinder: Günster, Raimund, 7000 Chur (CH)
(74) Vertreter: Hasler, Erich

(57) **Zusammenfassung**

Es ist eine Vorrichtung zur energetischen Nutzung von Wasserkraft vorgeschlagen. Die Vorrichtung umfasst ein Wasserbecken (11) mit einer Umfassungswand (15), einem Beckenboden (13), einer Zulauföffnung (21), einem in dem Beckenboden (13) mittig angeordnete Auslassöffnung (17) und Einbauten (19) im Wesentlichen quer zur tangentialen Oberfläche der Umfassungswand (15). Das Wasserbecken (11) ist drehbar mit den Einbauten (19) um eine Rotationsachse (33), welche senkrecht zum Boden (13) orientiert ist, gelagert.

## Beschreibung

### Gebiet der Erfindung

Die Erfindung betrifft eine Vorrichtung zur energetischen Nutzung von Wasserkraft gemäss Oberbegriff von Anspruch 1.

### Stand der Technik

Wasserbecken, in denen ein Wasserwirbel erzeugt wird, finden ihre Anwendung insbesondere bei Klein-Wasserkraftwerken.

Die WO 2004/061295 zeigt beispielsweise ein Wasserkraftwerk mit einem Wasserbecken und einem Wasserzulauf am oberen Rand des Wasserbeckens. Das Wasserbecken hat einen ebenen und horizontalen Boden. Im Boden befindet sich ungefähr mittig eine runde Auslassöffnung. Zwischen dem Boden des Wasserbeckens und dem Unterwasser ist ein Freihang ausgebildet. Der Freihang ist für einen stabil rotierenden Wasserwirbel notwendig. Die Rotationsenergie des Wasserwirbels ist auf eine Turbine übertragen, welche koaxial im Wasserwirbel rotiert. Die Turbine ist über ihren gesamten Umfang tangential beaufschlagt und ringförmig axial durchströmt. Ein an die Turbine gekoppelter Generator wandelt in bekannter Weise die Rotationsenergie in elektrische Energie. Ein Vorteil dieses Wasserkraftwerks ist, dass es keine Druckleitungen oder Leitapparate benötigt und kostengünstig herstellbar ist. Nachteilig erweist sich die Bauhöhe des Wasserkraftwerkes, die durch den zwingend vorhandenen Freihang zu Stande kommt. Um die Bauhöhe zu kompensieren, sind kostspielige Aushubarbeiten durchzuführen.

Die DE 43 14 820 zeigt eine Wasserturbine, welche durch einen künstlich erzeugten Wasserwirbel betrieben ist. Der Wirbel entsteht durch Zwangsführung einer Wasserströmung in einem Stauraum, der die Wasserturbine umgibt. Die Wasserturbine ist so aufgebaut, dass sie schwimmend in eine Wasserströmung eingesetzt ist. Ein Nachteil der sich daraus ergibt, ist, dass diese Art einer Wasserturbine nur an Fliessgewässern einsetzbar ist, die eine ausreichende Breite und Tiefe zur Aufnahme der Wasserturbine aufweisen.

### Aufgabe der Erfindung

Aufgabe der vorliegenden Erfindung ist es daher, ein Wasserbecken vorzuschlagen, welches die eingangs erwähnten Nachteile nicht aufweist. Insbesondere ist es Ziel, ein Wasserbecken zu zeigen, das auf einfache Weise Gewässer mit geringen Durchflussraten und/oder niedrigen Strömungsgeschwindigkeiten energetisch nutzt und dabei kostengünstig herzustellen ist.

### Beschreibung

Erfindungsgemäss wird die Aufgabe bei einer Vorrichtung zur energetischen Nutzung von Wasser gemäss Oberbegriff des Anspruchs 1 dadurch gelöst, dass ein Wasserbecken mit Einbauten um eine Rotationsachse, welche senkrecht zum Boden orientiert ist, drehbar gelagert ist. Die erfindungsgemässe Vorrichtung hat den Vorteil, dass das Wasserbecken nicht ins Erdreich versenkt werden muss, sondern an jeder beliebigen Stelle, an der ein Fliessgewässer oder Rinnsal vorhanden ist, aufgestellt werden kann. Der Aufbau ist einfach gehalten und die Investition kann dadurch niedrig gehalten werden.

Gemäss einer vorteilhaften Ausführungsform, weisen die Einbauten eine Krümmung auf. Durch die Krümmung wird das Wasser derart in Richtung der Auslassöffnung gelenkt, dass dem Wasser möglichst viel kinetische Energie entzogen wird.

Zweckmässigerweise sind die Einbauten mit einem ersten Ende bei der Umfassungswand angeordnet und erstrecken sich mit einem zweiten Ende bis zur Auslassöffnung. Durch diese Formgebung wird das Wasser während seiner gesamten Verweilzeit in dem Wasserbecken an den Einbauten geführt. Dies führt zu einer verbesserten Energieübertragung vom Wasser auf das Wasserbecken.

Vorzugsweise sind die zweiten Enden der Einbauten in einem Winkel grösser 0 und kleiner 90 Grad zur radialen Richtung der Auslassöffnung orientiert ist. Diese Strömungsführung erlaubt eine optimale Energieausnutzung an der Auslassöffnung.

Mit Vorteil besitzt das Wasserbecken einen Deckel, gegenüber welchem das Wasserbecken drehbar angeordnet ist. Dadurch dass der Deckel feststeht, während das Wasserbecken rotiert, sind mehrere feststehende Wasserzuläufe durch den Deckel durchführbar, ohne dass das Wasserbecken in seiner Bewegung gestört ist. Der Deckel schützt das Wasserbecken vor Verschmutzungen, die zu einer Behinderung des Abflusses führen können.

Mit Vorteil weist das Wasserbecken eine Abdeckung auf. Der Boden, die Einbauten und die Abdeckung bilden eine Mehrzahl von geschlossen Kanälen, die von der Umfassungswand zur mittigen Auslassöffnung führen. Diese geschlossenen Kanäle gewährleisten einen Druckaufbau durch Rückstau des Wassers in dem Wasserbecken. Dieser Druckaufbau kann von den Einbauten zur Erzeugung von zusätzlicher kinetischer Energie benutzt werden.

Dadurch dass ein Zulauf in tangentialer Richtung zur Umfassungswand angeordnet ist kann kinetische Energie einfach auf die Einbauten übertragen werden.

Die kinetische Energie des drehenden Wasserbeckens wird zweckmässigerweise auf einen Generator zur Erzeugung von elektrischer Energie übertragen.

Mit Vorteil ist das Wasserbecken ein rotationssymmetrischer Körper. Unerwünschte Unwuchtigkeiten während der Rotation des Wasserbeckens können durch diese Formgebung verhindert werden.

Dadurch dass ein Lager ringförmig um die Auslassöffnung angeordnet ist, oder die Auslassöffnung ringförmig um ein zentrales Lager angeordnet ist, ist ein gleichmässiger runder Lauf gesichert, selbst wenn das gefüllte Wasserbecken eine grosse Schwungmasse aufweist.

In einer bevorzugten Ausführungsform sind mindestens zwei Wasserbecken übereinander angeordnet und die Auslassöffnung des oberen Wasserbeckens mündet in die Zulauföffnung des unteren Wasserbeckens. So kann die vorhandene potentielle Energie des Wasserzulaufs mit mehreren kleinen Wasserbecken genutzt werden.

Mit Vorteil ist an der Auslassöffnung eine feststehende Strömungsführung angeordnet, um das durch die Strömungsführung austretende Wasser tangential in das untere Wasserbecken zu leiten. Dadurch kann die nach dem Durchlauf des oberen Wasserbeckens noch vorhandene kinetische Energie des Wassers im Darunterliegenden Wasserbecken teilweise genutzt werden.

Nachfolgend wird die Erfindung unter Bezugnahme auf die Figuren in schematischer Darstellung näher im Detail beschrieben. Es zeigt:
- Figur 1:: das erfindungsgemässe Wasserbecken in perspektivischer Ansicht;
- Figur 2:: eine Draufsicht des Wasserbeckens aus Figur 1;
- Figur 3:: eine Draufsicht einer Ausführungsform, mit schaufelförmigen Ein- bauten;
- Figur4:: eine Draufsicht einer Ausführungsform mit strömungstechnisch verbesserten Einbauten;
- Figur 5:: eine Seitenansicht einer Ausführungsvariante mit teilweise ver- schlossenem Wasserbecken;
- Figur 6: eine Seitenansicht einer Ausführungsvariante mit mehreren Zu- laufströmen und
- Figur7:: eine Seitenansicht zweier übereinander angeordneten Wasserbe- cken.

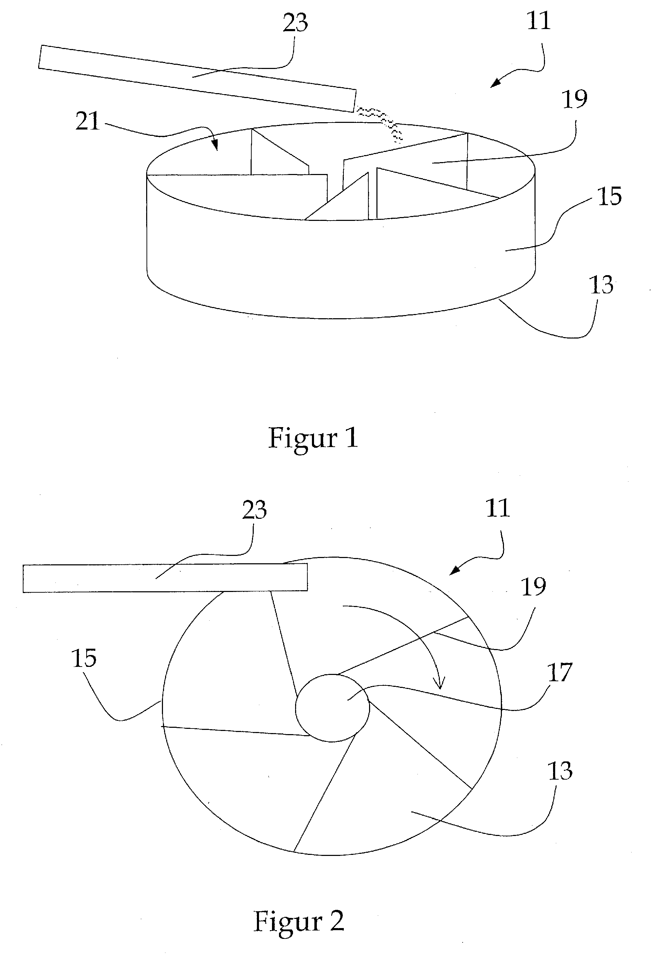

Die Figuren 1 bis 2 zeigen eine Vorrichtung zur energetischen Nutzung von Wasser, die ein Wasserbecken 11 umfasst. Das Wasserbecken 11 hat einen Boden 13, an dem eine Umfassungswand 15 angeordnet ist. Mittig im Beckenboden 13 befindet sich eine Auslassöffnung 17. In dem Wasserbecken 11 befinden sich Einbauten 19, die im Wesentlichen quer zur tangentialen Oberfläche der Umfassungswand orientiert sind. Die Einbauten in Figur 1 und 2 sind plan geformt und in gleichmässigen Abständen rund um die Auslassöffnung 17 angeordnet. An der dem Boden 13 abgewandte Seite befindet sich eine rotationssymmetrische Zulauföffnung 21, welche direkt an die Umfassungswand 15 anschliesst. In kurzem Abstand zur Zulauföffnung 21 ist ein Zulauf 23 in annähernd tangentialer Richtung zur Umfassungswand 15 positioniert.

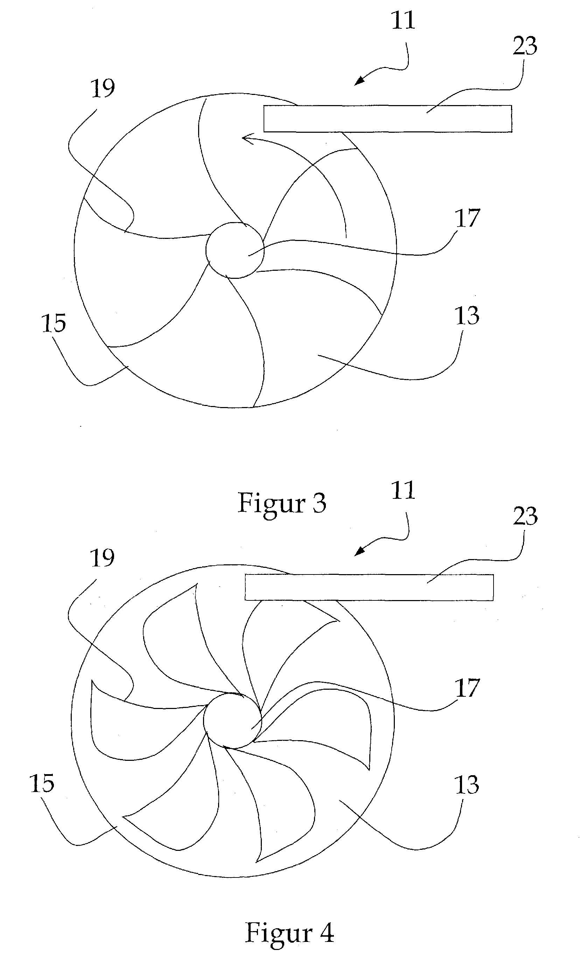

Die Figuren 3 bis 4 zeigen Einbauten 19, welche einer Wasserströmung, die durch das Wasserbecken 11 fliesst, derart angepasst sind, dass die Nutzung der Wasserkraft verbessert ist. Diese Einbauten 19 weisen eine Krümmung auf. Die zur Auslassöffnung 17 gerichteten Enden der Einbauten 19 weisen einen Winkel zwischen 0 und 90 Grad zur radialen Richtung der Auslassöffnung 17 auf. Es kann angenommen werden, dass durch die Einbauten 19, dass Wasser im Wasserbecken 11 so geführt wird, dass dem Wasser möglichst viel kinetische Energie entzogen wird.

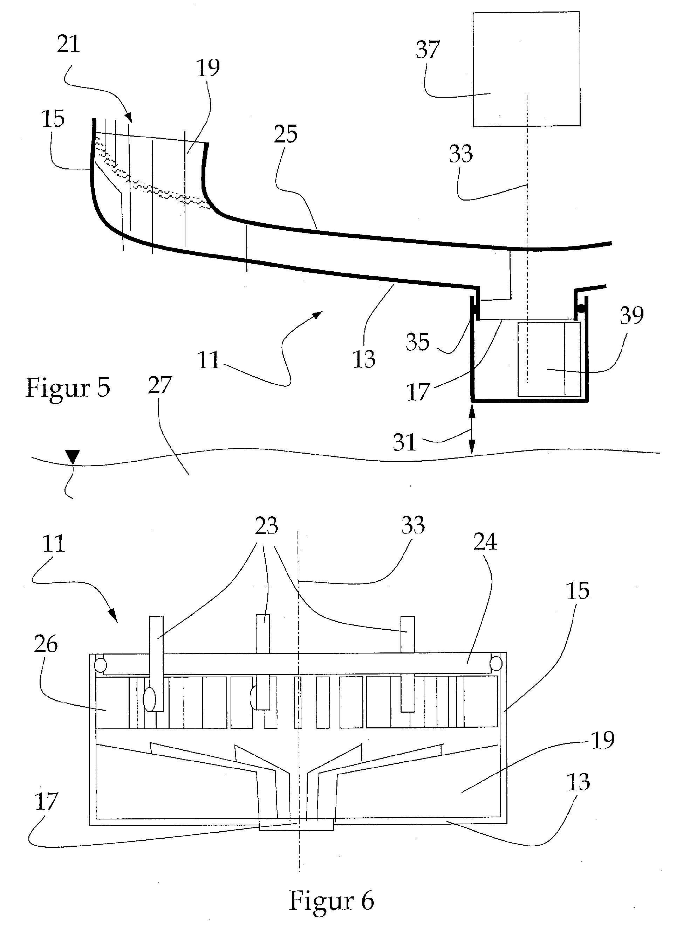

Figur 5 zeigt eine Ausführungsform des Wasserbeckens 11 dessen Zulauföffnung 21 durch eine Abdeckung 25 teilweise verschlossen ist. Die Zulauföffnung 21 stellt in diesem Ausführungsbeispiel einen Kreisring zwischen dem Umfang der Umfassungswand 15 und dem Umfang der Abdeckung 25 dar. Der Boden 13, die Einbauten 19 und die Abdeckung 25 bilden Kanäle 29, in denen das Wasser von der Zulauföffnung 21 zur Auslassöffnung 17 zwangsgeführt ist. Zwischen der Auslassöffnung 17 und einem abfliessenden Unterwasser 27 befindet sich ein räumlicher Abstand 31. Dieser Abstand ist für die Ausbildung eines Wasserwirbels in dem Wasserbecken notwendig.

Figur 6 zeigt eine Ausführungsvariante des Wasserbeckens 11 bei der die dem Boden 13 abgewandte Seite des Wasserbeckens 11 durch einen Deckel 24 abgedeckt ist. Der Deckel 24 ist durch am Umfang verteilte Lagerelemente 22 drehbar an der dem Boden 13 abgewandten Seite mit dem Wasserbecken 11 verbunden. Durch den Deckel 24 sind mehrere Zuläufe 23 geführt. Die Zuläufe 23 orientieren das zulaufende Wasser tangential an den dem Boden13 abgewandten Beckenrand. Am Rand des Wasserbeckens sind in geringem Abstand zum Deckel 24 inwendig Fortsätze 26 angeordnet. Die Fortsätze sind in gleichmässigem Abstand, über den gesamten Umfang des Wasserbeckens 11 angeordnet und sind im Wesentlichen normal zur Umfassungswand 15 orientiert.

Die Funktion der erfindungsgemässen Vorrichtung kann wie folgt beschrieben werden: Über den mindestens einen Zulauf 23 wird Wasser in tangentialer Richtung zur Umfassungswand 15 in das Wasserbecken 11 eingespeist. Die Fliessrichtung des Wassers wird von den Einbauten 19 in Richtung der Auslassöffnung 17 umgelenkt. Durch die Umlenkung der Strömungsrichtung wird kinetische Energie auf das Wasserbecken 11 übertragen. Das Wasserbecken 11 ist drehbar um seine Rotationsachse 33 gelagert, welche senkrecht zum Boden 13 orientiert ist. Als Lager dient ein Wälzlager 35, das um die Auslassöffnung 17 angeordnet ist. Denkbar wäre es auch, dass das Wälzlager 35 an einem feststehenden Stab angeordnet ist, der in der Rotationsachse 33 liegt. Durch radiale gerichtete Verbindungsstäbe ist das Wasserbecken 11 mit dem Wälzlager 35 verbunden (in den Figuren nicht ausgeführt). Das Wasserbecken 11 wird in Rotation versetzt. Trifft das Wasser auf die Einbauten 19 bzw. die Fortsätze 26, wird dem Wasser kinetische Energie entzogen und über die Einbauten 19 bzw. die Fortsätze 26 auf das Wasserbecken 11 übertragen. Falls das Wasser durch den Deckel 24 eingeleitet wird, steht der Deckel 24 während der Rotation des Wasserbeckens still. Dabei baut sich eine Schwungmasse auf, da durch die wirkende Zentrifugalkraft, das Wasser eine Verweilzeit im Wasserbecken 11 besitzt. Das Wasser verlässt das Wasserbecken 11 durch die mittige Auslassöffnung 17. Dies führt zum Aufbau eines Strömungswirbels. Es kann vermutet werden, dass der Strömungswirbel kinetische Energie zum Antrieb des Wasserbeckens 11 leistet. Unterhalb der Auslassöffnung 17 können am Boden 13 eine spiralförmige Wasserführung oder mehrere Düsen, in denen das Wasser vor dem Austritt aus dem Wasserbecken 11 geführt ist, angeordnet sein. Diese speziellen Wasserführungen nach der Auslassöffnung 17 sollen dazu dienen, dem Wasser weitere kinetische Energie zu entnehmen.. Um einen runden Lauf des Wasserbeckens 11 zu gewährleisten, ist das Wasserbecken 11 als rotationssymmetrischer Körper ausgeführt. Ein Teil der kinetischen Energie des Wasserbeckens 11 wird zum Antrieb eines Generators 37 mit einer Drehachse genutzt. Es ist denkbar, dass die Drehachse des Generators 37 mit der Rotationsachse 33 fluchtet und direkt mit dem Wasserbecken in Verbindung steht. Denkbar ist es auch, dass der Generator 37 über einen Riemenantrieb betrieben ist. In der Ausführungsvariante, die in Figur 5 gezeigt ist, wird das Wasser in geschlossenen Kanälen 29 geführt. Dies birgt den Vorteil in sich, dass das Wasser bis zur Zulauföffnung 21 rückstaubar ist. Die potentielle Energie des sich in dem Wasserbecken 11 befindenden Wassers kann dadurch erhöht werden.

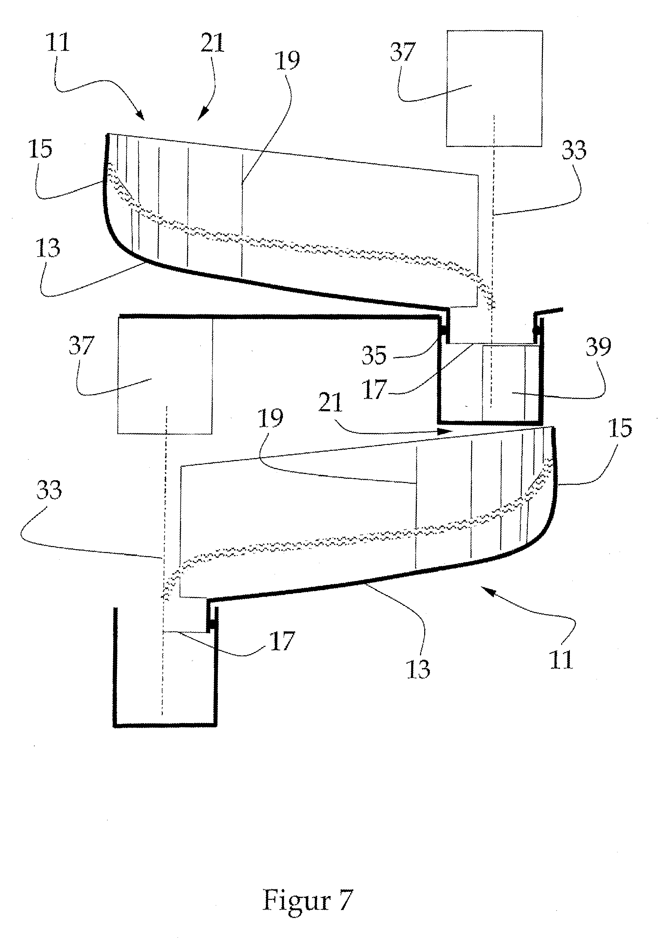

Figur 7 stellt eine Ausführungsvariante dar, bei der zwei baugleiche Wasserbecken 11 derart übereinander angeordnet sind, dass die Rotationsachse 33 des oberen Wasserbeckens 11 im wesentlichen durch die Zulauföffnung 21 des unteren Wasserbeckens verlauft. Das Wasser, das das obere Wasserbecken 11 durch die Auslassöffnung 17 verlässt, wird über eine feststehende Strömungsführung 39 geleitet. Die Strömungsführung 39 leitet das Wasser tangential in die Zulauföffnung 21 des unter Wasserbeckens 11. Die Kaskade an Wasserbecken 11 kann auch mehr als zwei Wasserbecken 11 aufweisen, wenn die Bauhöhe der Kaskade durch das natürliche Gefälle des Wasserlaufs kompensierbar ist.

Ein um eine Rotationsachse 33 drehbares Wasserbecken 11 dient der energetischen Nutzung von Wasserkraft. Das Wasserbecken 11 umfasst eine Zulauföffnung 21, eine Umfassungswand 15, einen Beckenboden 13, eine Auslassöffnungen 17 und Einbauten 19. Die Einbauten 19 sind im Wesentlichen quer zur tangentialen Oberfläche der Umfassungswand 15 gerichtet.

### Legende:

- 11: Wasserbecken
- 13: Boden
- 15: Umfassungswand
- 17: Auslassöffnung
- 19: Einbauten
- 21: Zulauföffnung
- 22: Lagerelemente
- 23: Zulauf
- 24: Deckel
- 25: Abdeckung
- 26: Fortsätze
- 27: Unterwasser
- 29: Kanäle
- 31: Abstand
- 33: Rotationsachse
- 35: Wälzlager
- 37: Generator
- 39: Strömungsführung

## Patentansprüche

1. Vorrichtung zur energetischen Nutzung von Wasserkraft umfassend ein Wasserbecken (11) mit
- einer Umfassungswand (15),
- einem Beckenboden (13),
- einer Zulauföffnung (21) und
- einer in dem Beckenboden mittig angeordnete Auslassöffnung (17)
**dadurch gekennzeichnet,**
**dass** das Wasserbecken (11) mit Einbauten (19), welche im Wesentlichen quer zur tangentialen Oberfläche der Umfassungswand (15) orientiert sind, um eine Rotationsachse (33), welche senkrecht zum Boden (13) orientiert ist, drehbar gelagert ist.

2. Vorrichtung nach Anspruch 1, **dadurch gekennzeichnet, dass** die Einbauten (19) eine Krümmung aufweisen,

3. Vorrichtung nach einem der Ansprüche 1 bis 2, **dadurch gekennzeichnet, dass** die Einbauten (19) mit einem ersten Ende bei der Umfassungswand (19) angeordnet sind und mit einem zweiten Ende sich bis zur Auslassöffnung (17) erstrecken.

4. Vorrichtung nach Anspruch 3, **dadurch gekennzeichnet, dass** das zweite Ende in einem Winkel grösser 0 und kleiner 90 Grad zur radialen Richtung der Auslassöffnung (17) orientiert ist.

5. Vorrichtung nach einem der Ansprüche 1 bis 4, **dadurch gekennzeichnet, dass** das Wasserbecken (11) einen Deckel (24) hat, gegenüber welchem das Wasserbecken (11) drehbar angeordnet ist.

6. Vorrichtung nach einem der Ansprüche 1 bis 4, **dadurch gekennzeichnet, dass** das Wasserbecken (11) eine Abdeckung (25) hat.

7. Vorrichtung nach Anspruch 6, **dadurch gekennzeichnet, dass** der Boden (13), die Einbauten (19) und die Abdeckung (25) eine Mehrzahl von geschlossen Kanälen (29) bilden, die von der Umfassungswand (15) zur mittigen Auslassöffnung (17) führen.

8. Vorrichtung nach einem der Ansprüche 6 bis 7, **dadurch gekennzeichnet, dass** die Zulauföffnung (21) zwischen dem Umfang der Umfassungswand (15) und dem Umfang der Abdeckung (25) gelegen ist.

9. Vorrichtung nach einem der Ansprüche 1 bis 8, **dadurch gekennzeichnet, dass** ein Zulauf (23) in tangentialer Richtung zur Umfassungswand (15) angeordnet ist.

10. Vorrichtung nach einem der Ansprüche 1 bis 9, **dadurch gekennzeichnet, dass** das Wasserbecken (11) mit einem Generator (37) in Wirkverbindung steht.

11. Vorrichtung nach einem der Ansprüche 1 bis 10, **dadurch gekennzeichnet, dass** das Wasserbecken (11) ein rotationssymmetrischer Körper ist.

12. Vorrichtung nach einem der Ansprüche 1 bis 11, **dadurch gekennzeichnet, dass** ein Lager (35) ringförmig um die Auslassöffnung (17) angeordnet ist.

13. Vorrichtung nach einem der Ansprüche 1 bis 11, **dadurch gekennzeichnet, dass** die Auslassöffnung (17) ringförmig um ein zentrales Lager (35) angeordnet ist.

14. Vorrichtung nach einem der Ansprüche 1 bis 13, **dadurch gekennzeichnet, dass** mindestens zwei Wasserbecken (11) übereinander angeordnet sind und dass die Auslassöffnung (17) des oberen Wasserbeckens (11) in die Zulauföffnung (21) des unteren Wasserbeckens (11) mündet.

15. Vorrichtung nach einem der Ansprüche 1 bis 14, **dadurch gekennzeichnet, dass** an der Auslassöffnung (17) eine feststehende Strömungsführung (39) angeordnet ist, um das durch die Strömungsführung (39) austretende Wasser tangential in das untere Wasserbecken (11) zu leiten.
